# EUROPÄISCHE PATENTANMELDUNG

(11) **EP 3 961 657 A1**
(43) Veröffentlichungstag der Anmeldung: **02.03.2022**
(21) Anmeldenummer: 21191423.9
(22) Anmeldetag: 16.08.2021
(51) Int. Cl.: H01B 7/42, H01B 9/04

(54) **HOCHVOLTLEITUNG UND HOCHVOLTSYSTEM**

(30) Priorität: 19.08.2020 DE 102020121723
(71) Anmelder: Lisa Dräxlmaier GmbH, 84137 Vilsbiburg (DE)
(72) Erfinder: Himmel, Jörg, 84072 Au i. d. Hallertau (DE)

(57) **Zusammenfassung**

Die vorliegende Erfindung bezieht sich auf eine Hochvoltleitung (100) für KFZ-Hochvoltspannung, wobei die Hochvoltleitung (100) ein einen inneren Hohlraum (112) der Hochvoltleitung (100) umschließendes Innenrohr (102), einen das Innenrohr (102) umschließenden elektrisch leitenden Innenleiter (104), eine den Innenleiter (104) umschließende Zwischenisolierung (106), einen die Zwischenisolierung (106) umschließenden elektrisch leitenden Außenleiter (108) und eine den Außenleiter (108) umschließende Außenisolierung (110) aufweist, wobei die Außenisolierung(110), der Außenleiter (108), die Zwischenisolierung (106), der Innenleiter (104) und das Innenrohr (102) koaxial zueinander angeordnet sind.

## Beschreibung

### Technisches Gebiet

Die vorliegende Erfindung betrifft eine Hochvoltleitung für KFZ-Hochvoltspannung und ein Hochvoltsystem.

### Stand der Technik

Die vorliegende Erfindung wird im Folgenden hauptsächlich in Verbindung mit Kabeln für Fahrzeugbordnetze beschrieben. Die Erfindung kann aber für jede Anwendung genutzt werden, in der elektromagnetische Felder von Kabeln kompensiert werden sollen und alternativ oder ergänzend Wärme aus den Kabeln abtransportiert werden soll.

Hochvoltleitungen in Fahrzeugen können als zwei im Wesentlichen parallel verlaufende Hochvoltkabel ausgeführt werden. Dabei ist jedes Kabel separat isoliert. die Kabel können einzeln oder zusammen gegen elektromagnetische Abstrahlung geschirmt ausgeführt sein, um die Kabel elektromagnetisch zu entkoppeln. Innerhalb von Aggregaten eines Hochvoltsystems des Fahrzeugs können die Hochvoltleitungen als massive Stromschienen ausgeführt sein. Ein Gehäuse der Aggregate übernimmt dann die elektromagnetische Abschirmung.

Die Kabel können zu einer Hochvoltleitung gebündelt sein. Dann kann die Hochvoltleitung zwischen den Kabeln einen separaten Kühlmittelkanal aufweisen, durch den ein Kühlmittelstrom zum Abführen von Wärme geleitet werden kann.

### Beschreibung der Erfindung

Eine Aufgabe der Erfindung ist es daher, unter Einsatz konstruktiv möglichst einfacher Mittel eine verbessertes Hochvoltleitung und ein verbessertes Hochvoltsystem bereitzustellen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Durch den hier vorgestellten Ansatz kann ein einzelnes Kabel als Hinleitung und Rückleitung einer Hochvoltleitung verwendet werden. Durch den Stromfluss in entgegengesetzten Richtungen und die konzentrische Anordnung der Leiter können elektromagnetische Kopplungen weitestgehend vermieden werden. Im Inneren des Kabels kann ein Kühlmittelkanal ausgebildet sein, um die Hinleitung und die Rückleitung von innen heraus zu kühlen.

Es wird eine Hochvoltleitung für KFZ-Hochvoltspannung vorgeschlagen, wobei die Hochvoltleitung ein einen inneren Hohlraum der Hochvoltleitung umschließendes Innenrohr, einen das Innenrohr umschließenden elektrisch leitenden Innenleiter, eine den Innenleiter umschließende Zwischenisolierung, einen die Zwischenisolierung umschließenden elektrisch leitenden Außenleiter und eine den Außenleiter umschließende Außenisolierung aufweist, wobei die Außenisolierung, der Außenleiter, die Zwischenisolierung, der Innenleiter und das Innenrohr koaxial zueinander angeordnet sind.

Weiterhin wird ein Hochvoltsystem vorgeschlagen, wobei das Hochvoltsystem zumindest eine Hochvoltleitung gemäß dem hier vorgestellten Ansatz aufweist, wobei die Hochvoltleitung zwei Hochvoltschnittstellen des Hochvoltsystems verbindet, wobei zumindest ein Kühlmittelstrom von der einen Hochvoltschnittstelle zu der anderen Hochvoltschnittstelle durch zumindest einen im Hohlraum der Hochvoltleitung ausgebildeten Kühlmittelkanal geführt ist.

KFZ-Hochvoltspannung kann aktuell zwischen 400 Volt und 1000 Volt betragen und zum Übertragen von elektrischer Leistung zwischen Antriebskomponenten elektrisch angetriebener Fahrzeuge verwendet werden. Dabei können derzeit Stromstärken zwischen 200 Ampere und 500 Ampere erreicht werden. Ein Hochvoltsystem kann beispielsweise ein Antriebssystem eines elektrisch angetriebenen Fahrzeugs sein. Die Hochvoltleitung kann beispielsweise eine Traktionsbatterie des Fahrzeugs mit einer Leistungselektronik des Fahrzeugs verbinden. Ebenso kann die Hochvoltleitung die Leistungselektronik mit einer elektrischen Maschine des Fahrzeugs verbinden.

Bei hohen Stromstärken entsteht um den stromdurchflossenen Leiter ein starkes elektromagnetisches Feld. Eine Feldrichtung des Felds ist abhängig von einer Fließrichtung des Stroms im Leiter. Die hier vorgestellte Hochvoltleitung weist zwei hohle, koaxiale Leiter, also einen Innenleiter und einen Außenleiter auf. Durch die koaxiale Anordnung weisen die entstehenden elektromagnetischen Felder einen gemeinsamen Zentralpunkt auf. Da einer der Leiter bei bestimmungsgemäßer Verwendung der Hochvoltleitung als Hinleiter verwendet wird, während der andere Leiter als Rückleiter verwendet wird, fließt der Strom in beiden Leitern in entgegengesetzte Richtungen. Zusätzlich sind die Ströme in beiden Leitern im Wesentlichen gleich groß. Dadurch heben sich die elektromagnetischen Felder beider Leiter im Wesentlichen vollständig auf und die Hochvoltleitung erzeugt insgesamt kein störendes elektromagnetisches Feld.

Die Hochvoltleitung kann insbesondere einen runden Querschnitt aufweisen. Die Hochvoltleitung kann jedoch auch einen polygonalen oder ovalen Querschnitt aufweisen. Insbesondere kann die Hochvoltleitung einen geschlossen ringförmigen Querschnitt aufweisen. Dabei kann die Hochvoltleitung im Querschnitt bezogen auf eine geometrische Mitte rotationssymmetrisch oder bezogen auf eine Linie durch die geometrische Mitte spiegelsymmetrisch ausgebildet sein.

Bei hohen Stromstärken entsteht selbst in Leitern aus hochwertigem Leitermaterial eine große Menge Wärme aufgrund des ohmschen Widerstands der Leiter. Daher besteht bei der hier vorgestellten Hochvoltleitung die Möglichkeit, ein Kühlmittel durch den Hohlraum innerhalb der Leiter oder zumindest einen im Hohlraum ausgebildeten Kühlmittelkanal zu leiten. Das Kühlmittel kann die Wärme abtransportieren. Als Kühlmittel kann beispielsweise eine Flüssigkeit verwendet werden. Die Flüssigkeit weist gegenüber einem Gas eine höhere Wärmekapazität auf. Durch die Flüssigkeit kann eine große Energiemenge transportiert werden. Der Kühlmittelkanal kann so geformt sein, dass zumindest an einer Wärmeübergangsfläche zwischen dem Kühlmittel und der Wand des Kühlmittelkanals eine turbulente Strömung des Kühlmittels erzeugt wird. Durch die turbulente Strömung kann der Wärmeübergang in das Kühlmittel verbessert werden. Durch das Kühlmittel wird insbesondere der Innenleiter gekühlt. Der Außenleiter kann Wärme auch zumindest teilweise über eine Oberfläche der Hochvoltleitung abgeben.

Der Kühlmittelkanal kann als Verdampfer einer Klimaanlage ausgeführt sein. Durch verdampfendes Kühlmittel beziehungsweise Kältemittel kann der Hochvoltleitung so viel Wärme entzogen werden, dass ein spezifischer Widerstand des Leitermaterials gegenüber Raumtemperatur wesentlich sinkt. Dadurch entsteht gleichzeitig weniger Verlustleistung und es ist folglich weniger Kühlleistung zum Halten der Temperatur erforderlich.

An den Hochvoltschnittstellen des Hochvoltsystems kann die Hochvoltleitung elektrisch kontaktiert sein. Eine Hochvoltschnittstelle kann die Hochvoltleitung mit einem Aggregat des Hochvoltsystems verbinden. Ein Aggregat kann beispielsweise ein Steckverbinder oder ein Gehäuse einer elektrischen Komponente des Hochvoltsystems sein.

An zumindest einer der Hochvoltschnittstellen kann der Außenleiter durch eine koaxial zum Hochvoltkabel angeordnete Außenleiterkontaktierung der Hochvoltschnittstelle elektrisch kontaktiert sein. Der Innenleiter kann durch eine koaxial zum Hochvoltkabel angeordnete Innenleiterkontaktierung der Hochvoltschnittstelle elektrisch kontaktiert sein. Durch die koaxialen Kontaktierungen können auch innerhalb der Hochvoltschnittstelle die elektromagnetischen Felder kompensiert werden. Die Hochvoltschnittstelle kann einen runden Querschnitt aufweisen, der kreisförmige beziehungsweise runde Querschnitt kann einfach abgedichtet werden. In der Hochvoltschnittstelle kann der Außenleiter die Außenisolierung axial überragen. Der Außenleiter kann an einer freiliegenden Außenfläche durch die Außenleiterkontaktierung kontaktiert sein. Die Zwischenisolierung kann den Außenleiter um eine der Hochvoltspannung angepasste Kriechstrecke überragen. Durch die Kriechstrecke können Kriechströme innerhalb der Hochvoltschnittstelle vermieden werden. Zwischen der Außenleiterkontaktierung und der Innenleiterkontaktierung kann eine entsprechend dimensionierte Isolierung angeordnet sein. Die Isolierung kann an der Zwischenisolierung anliegen. Der Innenleiter kann die Zwischenisolierung axial überragen. Der Innenleiter kann auf einer freiliegenden Außenfläche durch die Innenleiterkontaktierung kontaktiert sein. Das Innenrohr kann den Innenleiter axial überragen. Die stufenweise abisolierte Hochvoltleitung kann zum Verbinden in die Hochvoltschnittstelle eingesteckt werden. Durch die konzentrische Ausführung kann die Hochvoltschnittstelle selbstzentrierend steckbar sein.

Der Hohlraum kann zwei koaxial zur jeweiligen Hochvoltschnittstelle angeordnete Hohlraumschnittstellen verbinden. Eine Hohlraumschnittstelle kann den zumindest einen Kühlmittelkanal fluidisch kontaktieren. Alternativ oder ergänzend kann die Hohlraumschnittstelle durch den Hohlraum verlaufende elektrische und/oder optische Datenleitungen kontaktieren. Die Hohlraumschnittstelle ist dabei zumindest funktional strikt von den Hochvoltkontaktierungen der Hochvoltschnittstelle getrennt.

Die Hochvoltleitung kann ungeschirmt ausgeführt sein. Die Hochvoltleitung kann ohne Schirm ausgeführt sein. Durch die konzentrische Anordnung des Innenleiters und des Außenleiters ist ein Schirm unnötig. Der Innenleiter und der Außenleiter fungieren vielmehr als Abschirmung für durch den Hohlraum verlaufende Datenleitungen.

Der Außenleiter und der Innenleiter können einen Leitungsquerschnitt aufweisen, der für eine Stromtragfähigkeit zwischen 200 und 500 Ampere konfiguriert ist. Der Leitungsquerschnitt kann zwischen 25 Quadratmillimeter und 100 Quadratmillimeter groß sein. Insbesondere kann der Leitungsquerschnitt größer als 50 Quadratmillimeter sein. Der Außenleiter und der Innenleiter können dabei unterschiedliche Materialstärken aufweisen. Insbesondere kann der Innenleiter aufgrund des geringeren Radius eine größere Materialstärke aufweisen, als der Außenleiter. Bei einer Ausführungsform ohne Kühlmittelkanal kann die Hochvoltleitung nur über ihre Außenfläche Wärme abgeben. Daher kann der Innenleiter einen größeren Leitungsquerschnitt als der Außenleiter aufweisen. Der Innenleiter kann dabei bestimmungsgemäß mit einer höheren Temperatur als der Außenleiter betrieben werden. Bei Ausführungsformen mit Kühlmittelkanal können der Außenleiter und der Innenleiter unterschiedliche Materialstärken aber im Wesentlichen gleich große Leitungsquerschnitte aufweisen. Wenn der Innenleiter über den Kühlmittelkanal auf einer geringeren Betriebstemperatur als der Außenleiter gehalten werden kann, kann der Innenleiter einen geringeren Leitungsquerschnitt als der Außenleiter aufweisen.

Der Außenleiter und/oder der Innenleiter können als Litzenpaket oder massiv ausgeführt sein. Eine Ausführung als Litzenpaket ist biegsamer und einfacher herstellbar als eine massive Ausführung. Die massive Ausführung kann mit einem geringeren Außendurchmesser ausgeführt werden, da die massive Ausführung eine höhere thermische Leitfähigkeit aufweist, als die Ausführung als Litzenpaket. Die massive Ausführung kann große Biegeradien aufweisen.

Der Hohlraum kann durch zumindest einen Steg in zumindest zwei Kanäle unterteilt sein. Die Kanäle können insbesondere als Kühlmittelkanäle für entgegen gerichtete Kühlmittelströme gleiche Querschnittsflächen aufweisen. Bei einer Trennung in einen Kühlmittelkanal und einen Kabelkanal können die Kanäle auch unterschiedliche Querschnittsflächen aufweisen.

Der Hohlraum kann durch zumindest drei Stege in zumindest drei Kanäle unterteilt sein. Die Stege können jeweils an einer Seite mit einer Wand des Innenrohrs und an einer gegenüberliegenden Seite miteinander verbunden sein. Das Innenrohr kann extrudiert werden. Die Stege können einfach gemeinsam mit der Wand extrudiert werden. Die Kanäle können als Leerrohre für unterschiedliche Verwendungsfälle bereitgehalten werden.

Im Hohlraum kann zumindest eine Datenleitung angeordnet sein. Eine Datenleitung kann lose in den Hohlraum eingezogen sein. Mehrere Datenleitungen können in einer Hülle zusammengefasst sein. Die Hülle der Datenleitung beziehungsweise der Datenleitungen kann eine Oberflächenstruktur zum Beeinflussen des Kühlmittelstroms aufweisen. Die Oberflächenstruktur kann als Abstandhalter zum Innenrohr dienen. Beispielsweise kann die Hülle Turbulatoren zum Erzeugen einer turbulenten Kühlmittelströmung aufweisen. Die Datenleitung kann als elektrischer Leiter oder als Lichtleiter ausgeführt sein. Mehrere Datenleitungen können im Hohlraum gebündelt sein. Ein im Hohlraum ausgebildeter Kabelkanal kann die zumindest eine Datenleitung von dem zumindest einen Kühlmittelkanal trennen. Dadurch kann die Datenleitung trocken entlang des Hohlraums geführt werden.

### Kurze Figurenbeschreibung

Nachfolgend wird ein vorteilhaftes Ausführungsbeispiel der Erfindung unter Bezugnahme auf die begleitenden Figuren erläutert. Es zeigen:
Fig. 1 eine räumliche Darstellung einer Hochvoltleitung gemäß einem Ausführungsbeispiel;
Fig. 2 eine Schnittdarstellung einer Hochvoltleitung gemäß einem Ausführungsbeispiel; und
Fig. 3 eine Darstellung einer Hochvoltschnittstelle eines Hochvoltsystems gemäß einem Ausführungsbeispiel.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

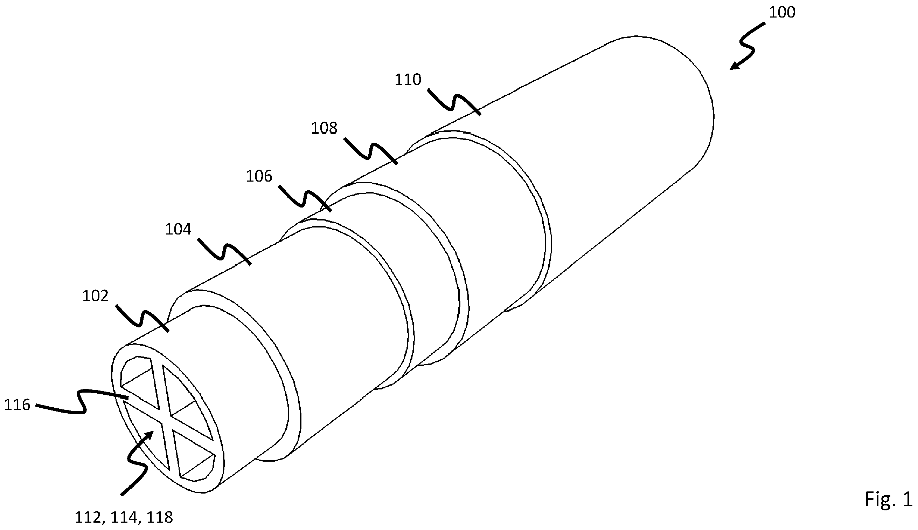

Zum leichteren Verständnis werden in der folgenden Beschreibung die Bezugszeichen zu den Figuren 1-3 als Referenz beibehalten.

Fig. 1 zeigt eine räumliche Darstellung einer Hochvoltleitung 100 gemäß einem Ausführungsbeispiel. Die Hochvoltleitung 100 weist einen konzentrischen Aufbau auf. Von innen nach außen weist die Hochvoltleitung 100 ein Innenrohr 102, einen Innenleiter 104, eine Zwischenisolierung 106, einen Außenleiter 108 und eine Außenisolierung 110 auf. Das Innenrohr 102 ist hohl und umschließt einen inneren Hohlraum 112 der Hochvoltleitung 100. Der Innenleiter 104, die Zwischenisolierung 106, der Außenleiter 108 und die Außenisolierung 110 sind ebenfalls jeweils rohrförmig. Die Hochvoltleitung 100 weist hier eine runde Querschnittsfläche auf. Die Hochvoltleitung 100 kann jedoch auch beispielsweise eine polygonale Querschnittsfläche aufweisen.

Die Hochvoltleitung 100 ist dazu konfiguriert elektrische Antriebsleistung für ein elektrisch angetriebenes Fahrzeug auf KFZ-Hochvoltspannung zu übertragen. Der Innenleiter 104 und der Außenleiteer 108 können als Hinleitung und als Rückleitung eines gemeinsamen Stromkreises verwendet werden. Dabei können bis zu 500 Ampere pro Leitung fließen. Dementsprechend groß sind Leitungsquerschnitte des Innenleiters 104 und des Außenleiters 108. Die Leitungsquerschnitte des Innenleiters 104 und des Außenleiters 108 sind hier im Wesentlichen gleich groß. Da ein Innenradius des Außenleiters 108 um eine Materialstärke der Zwischenisolierung 106 größer als ein Außenradius des Innenleiters 104 ist, weist der Innenleiter 104 eine größere Materialstärke auf als der Außenleiter 108, um den Leitungsquerschnitt bereitzustellen. Die Materialstärke der Zwischenisolierung 106 und eine Materialstärke der Außenisolierung 110 sind an die Hochvoltspannung angepasst.

In einem Ausführungsbeispiel ist in dem Hohlraum 112 ein Kühlmittelkanal 114 ausgebildet. Durch den Kühlmittelkanal 114 kann ein Kühlmittelstrom eines geeigneten Kühlmittels geleitet werden, um die Hochvoltleitung 100 von innen heraus zu kühlen. Das Kühlmittel führt dabei Wärmeenergie aus der Hochvoltleitung 100 ab, die insbesondere durch Verluste aufgrund des ohmschen Widerstands des Innenleiters 104 und des Außenleiters 108 entsteht. Dabei wird insbesondere der Innenleiter 104 gekühlt. Der Außenleiter 108 kann auch über eine Außenfläche der Hochvoltleitung 100 Wärmeenergie abgeben.

In einem Ausführungsbeispiel ist der Hohlraum 112 durch Stege 116 in Kanäle 118 unterteilt. Die Stege 116 sind hier kreuzförmig angeordnet und unterteilen den Hohlraum 112 in vier Kanäle 118. Je nach Bedarf können die Stege 116 anders angeordnet sein und unterschiedliche Anzahlen von Kanälen 118 ausbilden. Die Kanäle 118 können als Kühlmittelkanäle 114 oder als Leerrohre für beispielsweise Datenleitungen verwendet werden. Hier weisen die Kanäle 118 die gleiche Querschnittsfläche auf. Je nach Verwendung können die Kanäle 118 auch unterschiedliche Querschnittsflächen aufweisen.

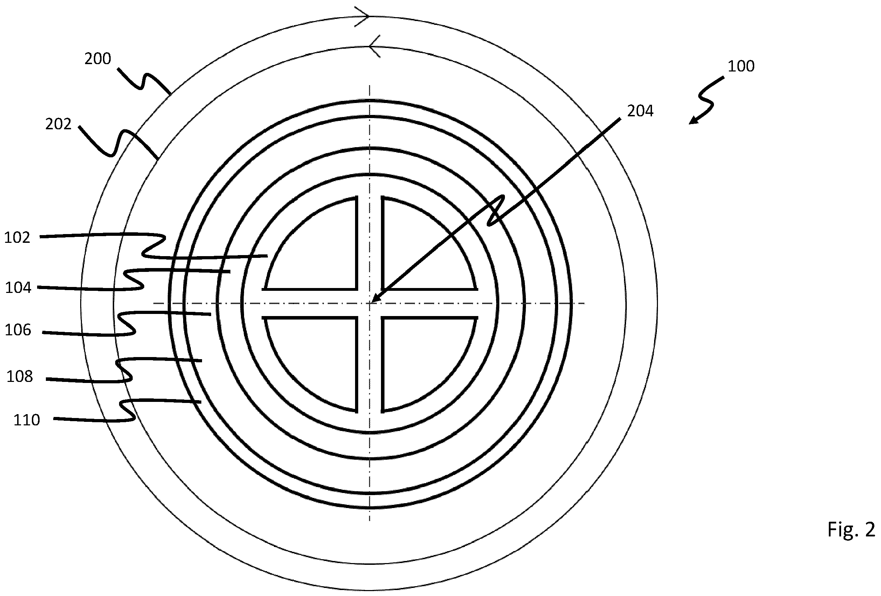

Fig. 2 zeigt eine Schnittdarstellung einer Hochvoltleitung 100 gemäß einem Ausführungsbeispiel. Die Hochvoltleitung 100 entspricht dabei im Wesentlichen der Hochvoltleitung in Fig. 1. Hier werden der Innenleiter 04 und der Außenleiter 108 als Hin- und Rückleitung im selben Stromkreis verwendet, sind also stromdurchflossen. Da so durch den Innenleiter 104 im Wesentlichen der gleiche Strom fließt wie durch den Außenleiter 108, bilden sich um den Innenleiter 104 und den Außenleiter 108 gleich starke elektromagnetische Felder 200, 202 aus. Da eine Stromrichtung im Innenleiter 104 entgegengesetzt zu einer Stromrichtung im Außenleiter 108 ist, weisen die elektromagnetischen Felder 200, 202 entgegengesetzte Feldrichtungen auf. Da der Innenleiter 104 und der Außenleiter 108 konzentrisch zueinander angeordnet sind, weisen die elektromagnetischen Felder 200, 202 einen gemeinsamen Zentralpunkt 204 auf. Da die elektromagnetischen Felder 200, 202 den gleichen Zentralpunkt 204 und die gleiche Stärke aber entgegengesetzte Feldrichtungen aufweisen, heben sich die elektromagnetischen Felder 200, 202 gegenseitig im Wesentlichen vollständig auf. Aufgrund dessen benötigt die hier vorgestellte Hochvoltleitung 100 keine Schirmung.

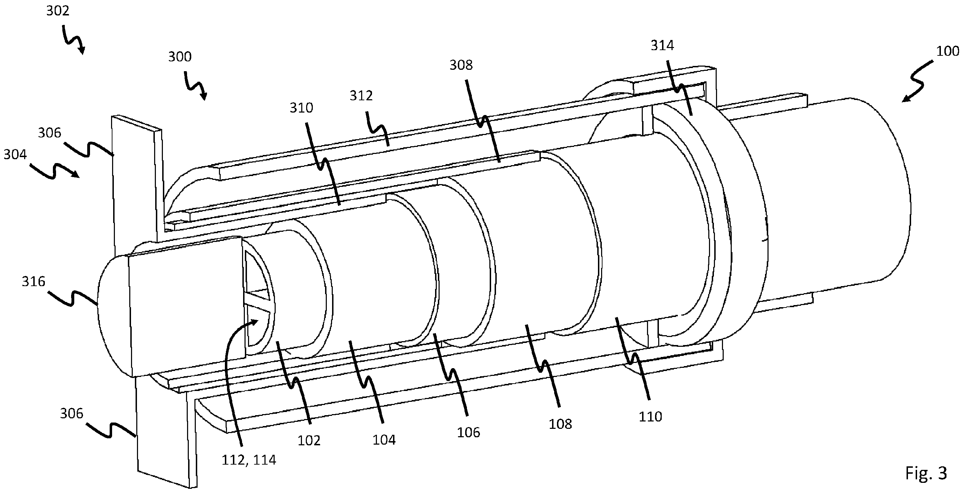

Fig. 3 zeigt eine Darstellung einer Hochvoltschnittstelle 300 eines Hochvoltsystems 302 gemäß einem Ausführungsbeispiel. Das Hochvoltsystem 302 ist dabei Teil eines Antriebssystems eines elektrisch angetriebenen Fahrzeugs. Die Hochvoltschnittstelle 300 verbindet eine Hochvoltleitung 100, wie sie beispielsweise in den Fign 1 und 2 dargestellt ist, mit einem Aggregat 304 des Hochvoltsystems 302. Hier sind nur Endbereiche von Stromschienen 306 des Aggregats 304 dargestellt.

Die einzelnen konzentrischen Schichten der Hochvoltleitung 100 sind treppenstufenförmig freigelegt. Dadurch ragt der Außenleiter 108 axial über die Außenisolierung 110 hinaus, die Zwischenisolierung 106 ragt über den Außenleiter 108 hinaus, der Innenleiter 104 ragt über die Zwischenisolierung 106 hinaus und das Innenrohr 102 ragt über den Innenleiter 104 hinaus. Das Innenrohr 102 endet stumpf. Ein Durchmesser der Hochvoltleitung 100 nimmt also zum Ende hin stufenweise ab. Die Zwischenisolierung 106 steht zumindest um eine an die KFZ-Hochvoltspannung angepasste Kriechstrecke über den Außenleiter 108 über.

Die Hochvoltschnittstelle 300 weist wie die Hochvoltleitung 100 konzentrische Schichten auf. Eine Außenleiterkontaktierung 308 der Hochvoltschnittstelle 300 kontaktiert eine abisolierte Außenfläche des Außenleiters 108. Die Außenleiterkontaktierung 308 umschließt die Außenfläche von allen Seiten. Eine Innenleiterkontaktierung 310 der Hochvoltschnittstelle 300 kontaktiert eine abisolierte Außenfläche des Innenleiters 104. Die Innenleiterkontaktierung 310 umschließt die Außenfläche von allen Seiten. Zwischen der Außenleiterkontaktierung 308 und der Innenleiterkontaktierung 310 ist eine Isolationsschicht angeordnet. Die Isolationsschicht weist eine an die KFZ-Hochvoltspannung angepasste Materialstärke auf. Die Außenleiterkontaktierung 308 ragt über die Isolationsschicht hinaus. Die Isolationsschicht ragt über die Innenleiterkontaktierung 310 hinaus. Die Isolationsschicht steht zumindest um die an die KFZ-Hochvoltspannung angepasste Kriechstrecke über die Innenleiterkontaktierung 310 über.

Die gesamte Schnittstelle 300 ist durch ein Gehäuse 312 umschlossen. Das Gehäuse 312 ist über eine Dichtung 314 an einer Außenfläche der Außenisolierung 110 abgedichtet. Da bei dem hier vorgestellte Ansatz sowohl die Hinleitung als auch die Rückleitung in der Hochvoltleitung 100 verlaufen, kann die Schnittstelle 300 durch mit einer einzelnen Dichtung abgedichtet werden.

In einem Ausführungsbeispiel ist koaxial zur Hochvoltschnittstelle 300 eine Hohlraumschnittstelle 316 des Aggregats 304 in der Hochvoltschnittstelle 300 angeordnet. Die Hohlraumschnittstelle 316 kontaktiert den Hohlraum 112 des Innenrohrs 102. Die Hohlraumschnittstelle 316 stellt eine Verbindung zu der durch den Hohlraum 112 verlaufenden Datenleitung beziehungsweise mehreren Datenleitungen und/oder dem durch den Hohlraum 112 verlaufenden Kühlmittelkanal 114 beziehungsweise mehreren Kühlmittelkanälen 114 her. Die Datenleitung kann dabei als elektrischer Leiter mit einer Niedervoltspannung betrieben werden. Ebenso kann die Datenleitung als optischer Lichtleiter ausgeführt sein.

Mit anderen Worten wird eine konzentrische Leistungsleitung vorgestellt.

Elektrische Verbindungen zur Übertragung hoher Leistungen erzeugen starke elektromagnetische Felder, die herkömmlicherweise nur durch Zusatzmaßnahmen, wie Schirmungen oder Filter reduziert bzw. kontrolliert werden können. Zusätzlich führt die Übertragung hoher Leistungen zu einer Erwärmung der Leiter, die auch aktiv gekühlt werden können, um die Isolierung nicht thermisch zu beschädigen.

Durch flächig parallel und möglichst nah zueinander angeordnete Hin- und Rückleiter (plus und minus) heben sich die erzeugten elektromagnetischen Felder - insbesondere im unteren Frequenzbereich nahezu auf, so dass idealerweise keine zusätzlichen EMV Maßnahmen erforderlich sind. Bei dem hier vorgestellten Ansatz werden die Leiter als konzentrische Rohre oder Litzengeflechte angeordnet, so dass sie umfänglich nur durch eine Isolierschicht voneinander getrennt sind. Im Zentrum entsteht ein Hohlraum, der von einem Kühlmittel durchflossen werden kann und/oder für andere, parallel zur Leistungsleitung verlaufende Medien (z.B. Datenleitung) Bauraum bietet.

Durch den hier vorgestellten Ansatz kann ein Leitungsstrang pro Anwendung eingespart werden und auf eine kostenintensive Schirmanbindung verzichtet werden. Die hier vorgestellte Hochvoltleitung ermöglicht eine einfache Formgebung aufgrund uneingeschränkten Biegerichtungen. Zusätzlich ist bei einem runden Querschnitt eine einfache Abdichtung gut möglich.

Es wird eine direkt (intern) kühlbare Leitung ohne Schirmungsaufwand vorgestellt.

Durch den Entfall der Schirmung kann die Anbindung an Aggregate, wie beispielsweise Stecker deutlich vereinfacht werden. Durch die konzentrische Ausführung ergibt sich eine geometrische Anpassbarkeit in jede Richtung. Durch den inneren Hohlraum ergibt sich die Möglichkeit einer integrierten Kühlung und/oder Leitungsmitführung.

Der koaxiale Leistungsleiter ist konzentrisch aufgebaut. Idealerweise ist der Querschnitt kreisförmig, kann aber auch andere Geometrien haben (oval, polygonal). In jedem Fall befindet sich im Zentrum ein Hohlraum, der auch in separate Kammern unterteilt sein kann. Von innen nach außen besteht der Leiter aus einem Innenrohr, einem Innenleiter, einer Zwischenisolierung, einem Außenleiter und einer Außenisolierung. Die Leiter können dabei massiv oder als Litzenpaket ausgeführt sein.

Bei einem stromdurchflossenen Leiter baut sich konzentrisch um den Leiter ein elektromagnetisches Feld auf. Da bei der koaxialen Leistungsleitung die Leiter für Hin- und Rückfluss (plus und minus) konzentrisch angeordnet sind und die Stromstärke in beiden Leitern gleich ist, ergeben sich zwei gleich große konzentrische Felder mit verschiedenen Vorzeichen, wodurch sie sich idealerweise gegenseitig auslöschen.

Der innere Hohlraum kann komplett oder segmentweise von einem Kühlmedium durchflossen werden, um aktiv die Temperatur des Leiterverbundes zu regulieren. Je nach Segmentierung ist die Realisierung von uni- und bidirektionalem Durchfluss möglich.

Zusätzlich oder anstelle des Kühlmediums kann der innere Hohlraum auch genutzt werden, um Signal- und/oder Kommunikationsleitungen aufzunehmen, ohne damit den Gesamtdurchmesser des Leitungsstrangs zu erhöhen.

Analog zu einem Klinkenstecker kann die Anbindung des Aggregats durch direkte Kontaktierung auf die jeweiligen Leiterrohre erfolgen und damit ohne die Aufhebung der EMV-relevanten Konzentrizität. Bei Realisierung durch einen runden Querschnitt ist zudem eine Medienabdichtung durch konventionelle Einzeladerdichtungen (bzw. deren Prinzip) umsetzbar. Wird zusätzlich der Innere Hohlraum für zusätzliche Leitungen verwendet, kann das Aggregat durch einen mittig angeordneten Stecker direkt und ohne zusätzliche Niedervolt-Schnittstelle gleichzeitig mit der Leistungsversorgung kontaktiert werden.

Da es sich bei den vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft gewählt.

### BEZUGSZEICHENLISTE

- 100: Hochvoltleitung
- 102: Innenrohr
- 104: Innenleiter
- 106: Zwischenisolierung
- 108: Außenleiter
- 110: Außenisolierung
- 112: Hohlraum
- 114: Kühlmittelkanal
- 116: Steg
- 118: Kanal

- 200: elektromagnetisches Feld
- 202: elektromagnetisches Feld
- 204: Zentralpunkt

- 300: Hochvoltschnittstelle
- 302: Hochvoltsystem
- 304: Aggregat
- 306: Stromschiene
- 308: Außenleiterkontaktierung
- 310: Innenleiterkontaktierung
- 312: Gehäuse
- 314: Dichtung
- 316: Hohlraumschnittstelle

## Patentansprüche

1. Hochvoltleitung (100) für KFZ-Hochvoltspannung, wobei die Hochvoltleitung (100) ein einen inneren Hohlraum (112) der Hochvoltleitung (100) umschließendes Innenrohr (102), einen das Innenrohr (102) umschließenden elektrisch leitenden Innenleiter (104), eine den Innenleiter (104) umschließende Zwischenisolierung (106), einen die Zwischenisolierung (106) umschließenden elektrisch leitenden Außenleiter (108) und eine den Außenleiter (108) umschließende Außenisolierung (110) aufweist, wobei die Außenisolierung(110), der Außenleiter (108), die Zwischenisolierung (106), der Innenleiter (104) und das Innenrohr (102) koaxial zueinander angeordnet sind.

2. Hochvoltleitung (100) gemäß Anspruch 1, wobei die Hochvoltleitung (100) ungeschirmt ausgeführt ist.

3. Hochvoltleitung (100) gemäß einem der vorhergehenden Ansprüche, bei der der Außenleiter (108) und der Innenleiter (104) einen Leitungsquerschnitt aufweisen, der für eine Stromtragfähigkeit zwischen 200 und 500 Ampere konfiguriert ist.

4. Hochvoltleitung (100) gemäß einem der vorhergehenden Ansprüche, bei der der Außenleiter (108) und/oder der Innenleiter (104) als Litzenpaket ausgeführt ist.

5. Hochvoltleitung (100) gemäß einem der vorhergehenden Ansprüche, bei der der Hohlraum (112) durch zumindest einen Steg (116) in zumindest zwei Kanäle (118) unterteilt ist.

6. Hochvoltleitung (100) gemäß Anspruch 5, bei der der Hohlraum (112) durch zumindest drei Stege (116) in zumindest drei Kanäle (118) unterteilt ist, wobei die Stege (116) jeweils an einer Seite mit einer Wand des Innenrohrs (102) und an einer gegenüberliegenden Seite miteinander verbunden sind.

7. Hochvoltleitung (100) gemäß einem der vorhergehenden Ansprüche, bei der im Hohlraum (112) zumindest eine Datenleitung angeordnet ist.

8. Hochvoltsystem (302), wobei das Hochvoltsystem (302) zumindest eine Hochvoltleitung (100) gemäß einem der vorhergehenden Ansprüche aufweist, wobei die Hochvoltleitung (100) zwei Hochvoltschnittstellen (300) des Hochvoltsystems (302) verbindet, wobei zumindest ein Kühlmittelstrom von der einen Hochvoltschnittstelle (300) zu der anderen Hochvoltschnittstelle (300) durch zumindest einen im Hohlraum (112) der Hochvoltleitung (100) ausgebildeten Kühlmittelkanal (114) geführt ist.

9. Hochvoltsystem (302) gemäß Anspruch 8, bei dem an zumindest einer der Hochvoltschnittstellen (300) der Außenleiter (108) durch eine koaxial zum Hochvoltkabel (100) angeordnete Außenleiterkontaktierung (308) der Hochvoltschnittstelle (300) elektrisch kontaktiert ist und der Innenleiter (104) durch eine koaxial zum Hochvoltkabel (100) angeordnete Innenleiterkontaktierung (310) der Hochvoltschnittstelle (300) elektrisch kontaktiert ist.

10. Hochvoltsystem (302) gemäß einem der Ansprüche 8 bis 9, bei dem der Hohlraum (112) zwei koaxial zur jeweiligen Hochvoltschnittstelle (300) angeordnete Hohlraumschnittstellen (316) verbindet.
